Europäisches Patentamt

European Patent Office

Office européen des brevets

(19)

(11) Veröffentlichungsnummer: **0 220 606**
**B1**

(12)                     EUROPÄISCHE PATENTSCHRIFT

(45) Veröffentlichungstag der Patentschrift: 09.05.90

(21) Anmeldenummer: 86114254.5

(22) Anmeldetag: 15.10.86

(51) Int. Cl.⁵: **B 60 R 1/06**

(54) Fernbedienbar verschwenkbarer Aussenspiegel für Nutzfahrzeuge.

(30) Priorität: 26.10.85 DE 3538159

(43) Veröffentlichungstag der Anmeldung:
06.05.87 Patentblatt 87/19

(45) Bekanntmachung des Hinweises auf die
Patenterteilung:
09.05.90 Patentblatt 90/19

(84) Benannte Vertragsstaaten:
AT BE CH ES FR GB IT LI LU NL SE

(56) Entgegenhaltungen:
DE-U-8 209 925
FR-A-2 531 020

(73) Patentinhaber: HOHE KG
Hauptstrasse 36
D-6981 Collenberg (DE)

(72) Erfinder: Polzer, Herwig
Unterer Steige Weg 13
D-8760 Miltenberg (DE)
Erfinder: Fuchs, Hans-Joachim
Gartenstrasse 12
D-6981 Dorfprozelten (DE)
Erfinder: Schaefer, Margot
H.T.-Gross-Strasse 56
D-7060 Schondorf (DE)

(74) Vertreter: Zinngrebe, Horst, Dr.rer.nat.
Saalbaustrasse 11
D-6100 Darmstadt (DE)

Courier Press, Leamington Spa, England.

## Beschreibung

Die Erfindung betrifft einen fernbedienbar verschwenkbaren Außenspiegel für Nutzfahrzeuge nach dem Oberbegriff des Hauptanspruches, wie er aus dem DE-U-82 09 925 als bekannt hervorgeht.

Um ein möglichst großes Sichtfeld nach hinten zu erzielen, stehen die Außenspiegel von Nutzfahrzeugen seitlich relativ weit von der Fahrzeugkarosserie ab. Beim Rangieren auf engem Raum, beim Passieren schmaler Durchfahrten oder auch beim Einfahren in eine automatische Waschanlage kann es daher erforderlich sein, den Spiegel zum Schutze vor Beschädigung an die Fahrzeugkarosserie anzuklappen.

In dem DE-U-82 09 925 ist ein Außenspiegel mit einem zweiarmigen, U-förmigen Haltebügel beschrieben, der vom Fahrersitz aus elektromotorisch über einen Getriebestellmotor mit selbsthemmendem Getriebe ein- und ausschwenkbar ist, wobei die Ausschwenkposition entweder individuell fernbetätigt einstellbar oder durch den Einbau eines justierbaren Endschalters festlegbar ist.

Zwischen der Abtriebswelle des Getriebestellmotors und einem der beiden, den Außenspiegel halternden Spiegelarme ist hierbei eine Rutschkupplung angeordnet, die beim Einschwenken des Spiegels ein kurzzeitiges Weiterlaufen des Motors ohne Beschädigungsgefahr für den Antrieb auch dann zuläßt, wenn der Spiegel bereits seinen mechanischen Endanschlag erreicht hat. Ferner ist diese Rutschkupplung so ausgelegt, daß sie bei normalen vom Fahrtwind aufbringbaren Kräften zwar noch greift, daß sie aber beim Auftreten größerer Kräfte — wie beispielsweise beim Anstoßen des Außenspiegels an ein Hindernis — durchdreht und ein Einklappen des Spiegels ohne Zerstörung des Spiegelantriebes ermöglicht.

Dieser Schutzfunktion für den Spiegelantrieb könnte die Rutschkupplung jedoch dann nicht gerecht werden, wenn die drehmomentübertragenden Teile der Rutschkupplung durch Witterungseinflüsse mit der Zeit korrodieren oder sonstwie eine in dieser Weise nicht beabsichtigte drehstarre Verbindung eingehen würden, was einer starren Ankopplung zwischen Getriebestellmotor und Spiegelarm gleichkäme. Darüber hinaus ist der die Anschwenkposition des Außenspiegels festlegende Endschalter im Bereich der Lagerachse — beispielsweise am Getriebestellmotor — angeordnet und wird vom Spiegelarm bei dessen Verschwenkbewegung betätigt. Dies bedingt jedoch eine exponierte Stellung des Endschalters mit allen damit verbundenen möglichen Nachteilen, wie etwa einer Beeinträchtigung durch Witterungseinflüsse, einer leichtmöglichen mechanischen Berührung, sowie unschönes Aussehen.

Der Erfindung liegt die Aufgabe zugrunde, einen gattungsgemäßen Außenspiegel für Nutzfahrzeuge zu schaffen, der bei kompakter Bauweise und unter Gewährleistung eines geringen, vom Außenspiegel ausgehenden Sicherheitsrisikos und einer hohen Funktionstüchtigkeit auch im Falle einer in defekter Weise drehstarren Rutschkupplung und einer Kollision des Außenspiegels mit einem Hindernis die Kollisionsschäden mildert und den Spiegelantrieb vor Zerstörung schützt.

Erfindungsgemäß wird diese Aufgabe durch die kennzeichnenden Merkmale des Hauptanspruches gelöst. In Redundanz zur Rutschkupplung weist der Verriegelungsstift ein definiertes Bruchverhalten auf, wodurch der Spiegelantrieb vor Zerstörung geschützt und die Wirkung eines Aufpralles abgeschwächt wird, was gleichzeitig das vom Außenspiegel ausgehende Sicherheitsrisiko verringert. Dadurch, daß Rutschkupplung, Endschalter und Getriebestellmotor in einem Gehäuse angeordnet sind und die Endschalter von dem Verriegelungsstift betätigt werden, der hierfür wenigstens einseitig über die äußere Mantelfläche des Überdeckungsbereiches hinausragt, wird eine kompakte Bauweise und gleichzeitig ein guter Schutz vor Witterungseinflüssen und gegen mechanische Berührung erzielt. Eine hohe Funktionstüchtigkeit der im Gehäuse untergebrachten Komponenten läßt sich somit gleichfalls gewährleisten.

Um den Anforderungen der Straßenverkehrsordnung gerecht zu werden, die das Betreiben von Kraftfahrzeugen nur bei vorhandener Möglichkeit zur Beobachtung des rückwärtigen Verkehrsgeschehens zuläßt, und um die Gefahren für die Verkehrsteilnehmer bei versehentlichem Fahren mit nicht ausgeklapptem Rückspiegel zu vermeiden, kann der Außenspiegel dahingehend ausgestaltet werden, daß in Einklappstellung und beim Ein- und Ausschwenken des Außenspiegels im Fahrerhaus ein Signal gegeben wird. Weitere zweckmäßige Ausgestaltungen der Erfindung können den Unteransprüchen entnommen werden.

Nachfolgend wird die Erfindung anhand eines in den Zeichnungen dargestellten Ausführungsbeispieles näher erläutert.

Es zeigen:

Figur 1 einen Außenspiegel in teilweise geschnittener Darstellung und

Figur 2 ein Schaltschema für das elektromotorische Ein und Ausschwenken des Außenspiegels mit eingebautem Warnsignal.

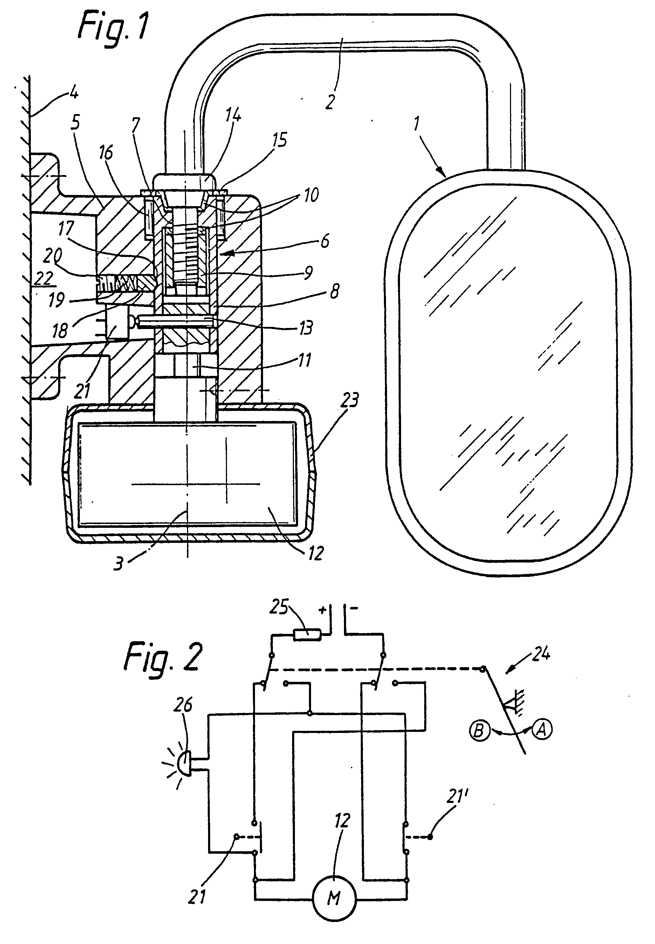

In Figur 1 ist der Außenspiegel 1 mit seinem Spiegelarm 2 um die Schwenkachse 3 schwenkbar in einem an der Fahrzeugkarosserie 4 befestigbaren Gehäuse 5 gelagert. Die Rutschkupplung 6 besteht aus der einen Kupplungsbund 7 aufweisenden äußeren Hülse 8, der inneren Hülse 9, dem feststehenden Bund 14 des Spiegelarmes 2 und den Reibbelägen 10. Die äußere Hülse 8 und die Abtriebswelle 11 des mit einem selbsthemmenden Getriebe versehenen Stellmotors 12 sind über einen die äußere Hülse 8 und das verdickte Ende der Abtriebswelle 11 radial durchdringenden Verriegelungsstift 13 verbunden. Die innere Hülse 9 ist in Form einer Mutter auf das mit einem Gewinde versehene freie Ende des

2

Spiegelarms 2 aufgeschraubt. Der Spiegelarm 2, dessen feststehender Bund 14 leicht konisch geformt ist, liegt über eine Deckscheibe 15 an der äußeren Hülse 8 an. Die äußere Hülse 8 ist über das Nadellager 16 in dem Gehäuse 5 gelagert und an ihrer Mantelfläche mit einer muldenförmigen Vertiefung 17 versehen, in die ein in einer rechtwinklig zur Schwenkachse verlaufenden Bohrung angeordneter Druckstift 18 eingreift. Auf diesen Druckstift 18 wirkt eine Spiralfeder 19 ein, die sich an einem in die rechtwinklig zur Schwenkachse verlaufende Bohrung eingedrehten Gewindestift 20 abstützt. Die Mantelfläche der äußeren Hülse 8 weist eine weitere und in der Zeichnung nicht dargestellte muldenförmige Vertiefung auf, die zwar in der gleichen Radialebene wie die Vertiefung 17, jedoch um etwa 90° versetzt zu dieser angeordnet ist. Der Verriegelungsstift 13 überragt einseitig die Mantelfläche der äußeren Hülse 8 und betätigt dabei den Endschalter 21. Ein weiterer und gleichfalls nicht dargestellter Endschalter 21′ ist um etwa 90° versetzt in dem Gehäuse 5 angeordnet. Der Verriegelungsstift 13, die Endschalter 21 und 21′ und die durch die Vertiefungen 17, den Druckstift 18, die Spiralfeder 19 und den Gewindestift 20 gebildete Verrastung sind über die Ausnehmung 22 des Gehäuses 5 frei zugänglich. Der Getriebestellmotor 12 ist von einem mittig geteilten Gehäuse 23 umgeben. Die elektrischen Verbindungsleitungen zwischen Spannungsquelle, Endschaltern 21 und 21′ und dem Getriebestellmotor 12 sind in Figur 1 nicht dargestellt.

Zum Ein- und Ausschwenken des Außenspiegels 1 wird der Getriebestellmotor 12 über einen Schalter vom Fahrersitz aus betätigt, woraufhin dieser über die Rutschkupplung 6 den Spiegelarm 2 verschwenkt. Mit der auf das Gewinde des freien Endes des Spiegelarmes 2 aufgeschraubten inneren Hülse 9 kann über den festen Bund 14 des Spiegelarmes 2 der Kupplungsbund 7 der äußeren Hülse 8 axial eingespannt und so das maximal und drehstarr von der Rutschkupplung übertragbare Drehmoment eingestellt werden. Die Einstellung ist hierbei so zu wählen, daß die Rutschkupplung den betriebsbedingt auftretenden Kräften zwar standhält, daß sie bei Einwirkung größerer Kräfte jedoch durchdreht. Die individuelle Einstellbarkeit des Außenspiegels ist somit gewährleistet.

Durch die leicht konische Ausgestaltung sowohl des Bundes 14 als auch des Kupplungsbundes 7 in ihren einander zugewandten Bereichen wird eine leichtere Einstellbarkeit der Kupplung 6 ermöglicht. Die Kupplungs-Reibbeläge 10 erhöhen hierbei das maximal übertragbare Drehmoment.

Das eine geringe radiale Bauhöhe aufweisende Nadellager 16 bewirkt eine platzsparende und leichtgängige Lagerung des Außenspiegels 1 in dem Gehäuse 5, wobei die Deckscheibe 15 das Lager und die Rutschkupplung vor eindringenden Fremdstoffen schützt. Um eine möglichst vibrationsfreie und leichtgängige Lagerung des Spiegelarmes 2 zu erzielen, ist dieser radial annähernd spielfrei im Kupplungsbund 7 zentriert, und das Nadellager 16 ist am Außenumfang der Hülse 8 in etwa auf gleicher Höhe wie die Rutschkupplung — insbesondere wie der Kupplungsbund 7 — angeordnet. Als Redundanz für die Rutschkupplung ist der das Drehmoment von dem Getriebestellmotor 12 auf die äußere Hülse 8 übertragende Verriegelungsstift 13 derart dimensioniert, daß er bei außergewöhnlich hohen Kräften, wie sie beispielsweise bei Kollisionen auftreten können, im Übergangsbereich Antriebswelle 11/ äußere HÜlse 8 bricht und die drehstarre Verbindung zwischen Spiegelarm 2 und Getriebestellmotor 12 löst. Der Verriegelungsstift 13 kann hierzu mit Sollbruchstellen versehen sein. Gleichzeitig betätigt der Verriegelungsstift 13 die im Gehäuse 5 untergebrachten Endschalter 21 und 21′ und setzt so den Getriebestellmotor 12 still. Hierdurch und durch die Ausgestaltung der Rutschkupplung in Form zweier ineinander angeordneter Hülsen wird eine besonders kompakte Bauweise erzielt. Die Endschwenkpositionen des Außenspiegels 1 werden durch die muldenförmigen Vertiefungen 17 in der Mantelfläche der äußeren HÜlse 8 festgelegt, in die der federbeaufschlagte Druckstift 18 der Verrastung eingreift. Hierdurch wird in den Endschwenkpositionen das selbsthemmende Getriebe von den auf es einwirkenden Kräften entlastet.

Das Schaltschema nach Figur 2 zeigt den Kippschalter 24, die Sicherung 25, die beiden Endschalter 21 und 21′, den Getriebestellmotor 12 und das Warnsignal 26.

In der in Figur 2 dargestellten Stellung der Endschalter 21 und 21′ und des Kippschalters 24 in Position A hat der Außenspiegel seine Ausklapp-Endposition eingenommen, in der das Warnsignal 26, der Endschalter 21 und damit der Getriebestellmotor 12 ausgeschaltet sind. Das Warnsignal 26 kann hierbei als akustisches oder optisches Signal, also als Summer oder Warnleuchte ausgebildet sein. Bei Schaltung des Kippschalters 24 in die Position B werden das Warnsignal und der Getriebestellmotor betätigt. Schon nach leichter Drehung des Spiegelarmes schließt der Endschalter 21 wieder und der Außenspiegel schwenkt in seine durch die Verrastung festgelegte Einklapp-Endposition, in der der Verriegelungsstift 13 den Endschalter 21′ öffnet und damit den Getriebestellmotor ausschaltet. In dieser Einklappstellung bleibt das Warnsignal 26 weiterhin in Betrieb. Beim Kippen des Schalters 24 in die Position A wird der Getriebestellmotor 12 inganggesetzt, der Endschalter 21′ schließt wieder und das Warnsignal 26 ist in Betrieb. Erst wenn der Verriegelungsstift den Endschalter 21 öffnet — wie in Figur 2 dargestellt — werden Motor und Warnsignal ausgeschaltet. Durch dieses Warnsignal ist der Fahrer somit über all die Betriebszustände des Außenspiegels — Einschwenkposition, Verschwenken des Außenspiegels — informiert, in denen eine Beobachtung des rückwärtigen Verkehrsgeschehens nicht möglich ist.

Ferner ist es denkbar, daß der Kippschalter 24 über ein Relais betätigbar ist, das von einem Sender ausgesteuert werden kann. Solche Sender könnten beispielsweise an den Ein- und Ausfahrten von Waschstraßen oder — wie im Falle spurgeführter Nutzfahrzeuge — von Tunnels installiert werden, wodurch das Ein- und Ausschwenken des Außenspiegels gänzlich ohne den manuellen Eingriff des Fahrers erfolgen würde. Auch hier würde ein Warnsignal den Fahrer gegebenenfalls daran erinnern, daß sich der Außenspiegel nicht in Ausklappstellung befindet.

**Patentansprüche**

1. Fernbedienbar verschwenkbarer Außenspiegel (1) für Nutzfahrzeuge, mit einem wenigstens mittelbar an der Fahrzeugkarosserie (4) lagerbaren Spiegelarm (2), welcher kraftschlüssig über eine Rutschkupplung (6) mit einer Abtriebswelle (11) eines Getriebestellmotors (12) verbunden und von diesem um eine vertikale Achse zwischen zwei Endstellungen — Einklappstellung und Ausklappstellung — verschwenkbar ist, ferner mit zwei Endschaltern (21, 21'), die bei Einnahme der Endstellungen durch den Außenspiegel (1) den Getriebestellmotor (12) ausschalten, gekennzeichnet durch die Kombination folgender Merkmale:
   a) die Abtriebswelle (11) des Getriebestellmotors (12) und ein Teil der Rutschkupplung (6) oder ein mit ihr verbundenes Teil überdecken sich wenigstens teilweise koaxial, wobei eine drehstarre Verbindung zwischen Abtriebswelle (11) und Rutschkupplung (6) durch einen diesen Überdeckungsbereich radial durchdringenden Verriegelungsstift (13) hergestellt wird, welcher derart dimensioniert ist, daß er beim Überschreiten der maximal betriebsbedingt auftretenden Kraft bricht;
   b) die Rutschkupplung (6), die beiden Endschalter (21, 21') und der Getriebestellmotor (12) sind in einem an der Fahrzeugkarosserie (4) befestigbaren Gehäuse (5) angeordnet;
   c) die Betätigung der Endschalter (21, 21') erfolgt durch den Verriegelungsstift (13), wobei dieser hierfür wenigstens einseitig über die äußere Mantelfläche des Überdeckungsbereiches hinausragt.

2. Außenspiegel nach Anspruch 1, dadurch gekennzeichnet, daß in Einklappstellung und beim Ein- und Ausschwenken des Außenspiegels (1) im Fahrerhaus des Nutzfahrzeuges ein Signal (26) gegeben wird.

3. Außenspiegel nach Anspruch 1 oder 2, dadurch gekennzeichnet, daß die Lagerung des Außenspiegels (1) im Gehäuse (5) über wenigstens ein Wälzlager erfolgt, das in einem Ringspalt zwischen einer vertikal verlaufenden und die Rutschkupplung (6) aufnehmenden Gehäusebohrung und dem mit der Abtriebswelle (11) des Getriebestellmotors (12) verbundenen Teil der Rutschkupplung (6) angeordnet ist.

4. Außenspiegel nach Anspruch 3, dadurch gekennzeichnet, daß das Wälzlager als Nadellager (16) ausgebildet ist.

5. Außenspiegel nach einem der vorangehenden Ansprüche, dadurch gekennzeichnet, daß der Spiegelarm (2) in seinen Endstellungen durch eine im Gehäuse (5) integrierte Verrastung arretierbar ist.

6. Außenspiegel nach einem der vorangehenden Ansprüche, dadurch gekennzeichnet, daß der mit der Abtriebswelle (11) des Getriebestellmotors (12) verbundene Teil der Rutschkupplung (6) als eine gleichachsig zur Schwenkachse verlaufende Hülse (8) ausgebildet ist, die in ihrem der Abtriebswelle (11) abgewandten Bereich einen radial nach innen sich erstreckenden Kupplungsbund (7) aufweist, und daß der Spiegelarm (2) einen axial feststehenden ersten und einen in Form einer Mutter auf das freie Spiegelarmende aufschraubbaren zweiten Bund (14, 9) aufweist, welche Bünde (14, 9) mit ihren einander zugewandten Stirnflächen den Kupplungsbund (7) der Hülse (8) axial einschließen und mit definierter Axialkraft reibschlüssig an ihm anliegen.

7. Außenspiegel nach Anspruch 6, dadurch gekennzeichnet, daß wenigstens der axial feststehende erste Bund (14) des Spiegelarmes (2) in seinem dem Kupplungsbund (7) der Hülse (8) zugewandten Bereich konisch geformt ist und die Hülse (8) im Berührungsbereich mit dem ersten Bund (14) einen entsprechenden Gegenkonus aufweist.

8. Außenspiegel nach einem der vorangehenden Ansprüche, dadurch gekennzeichnet, daß der Spiegelarm (2) radial spielfrei oder mit geringem Radialspiel im Kupplungsbund (7) der Hülse (8) zentriert ist und daß das Wälzlager am Außenumfang der Hülse (8) und in etwa auf gleicher axialer Höhe wie die Rutschkupplung (6) angeordnet ist.

9. Außenspiegel nach einem der vorangehenden Ansprüche, dadurch gekennzeichnet, daß die Berührungsbereiche zwischen den beiden Bünden (14, 9) des Spiegelarmes (2) zum einen und dem Kupplungsbund (7) der Hülse (8) zum anderen mit Reibbelägen (10) versehen sind.

**Revendications**

1. Rétroviseur extérieur pivotant manoeuvrable à distance (1) pour des véhicules utilitaires, avec un bras de rétroviseur (2) qui peut être monté au moins indirectement sur la carrosserie de véhicule (4) et qui est relié de manière adhérente, par l'intermédiaire d'un accouplement à friction (6), à un arbre de sortie (11) d'un moto-réducteur de positionnement (12) et peut être déplacé par celui-ci autour d'un axe vertical entre deux positions extrêmes — position rabattue et position déployée — en outre avec deux commutateurs de fin de course (21, 21') qui, lors de l'adoption des positions extrêmes par le rétroviseur extérieur (1), coupent le moto-réducteur de positionnement (12), caractérisé par la combinaison des caractéristiques suivantes:
   a) l'arbre de sortie (11) du moto-réducteur de positionnement (12) et une pièce de l'accouplement à friction (6) ou une pièce qui lui est reliée se recouvrent au moins partiellement coaxialement, une liaison rigide en rotation entre l'arbre de sortie (11) et l'accouplement à friction (6) étant réalisée par l'intermédiaire d'une broche de verrouillage (13) qui s'engage radialement à travers cette zone de recouvrement et qui est dimensionnée de façon à se briser lors du dépassement de la force maximale apparaissant en raison du fonctionnement;

b) l'accouplement à friction (6), les deux commutateurs de fin de course (21, 21') et le moto-réducteur de positionnement (12) sont disposés dans un boîtier (5) pouvant être fixé à la carrosserie de véhicule (4);

c) l'actionnement des commutateurs de fin de course (21, 21') s'effectue par l'intermédiaire de la broche de verrouillage (13), cette dernière dépassant, à cet effet, au moins d'un côté de la surface latérale extérieure de la zone de recouvrement.

2. Rétroviseur extérieur selon la revendication 1, caractérisé en ce qu'en position rabattue et lors du rabattement et du déploiement du rétroviseur extérieur (1), un signal (26) est donné dans la cabine du véhicule utilitaire.

3. Rétroviseur selon la revendication 1 ou 2, caractérisé en ce que le montage du rétroviseur extérieur (1) dans le boîtier (5) s'effectue par l'intermédiaire d'au moins un palier à roulement qui est disposé dans un interstice annulaire entre un perçage de boîtier s'étendant verticalement et recevant l'accouplement à friction (6) et la pièce de l'accouplement à friction (6) reliée à l'arbre de sortie (11) du moto-réducteur de positionnement (12).

4. Rétroviseur extérieur conforme à la revendication 3, caractérisé en ce que le palier à roulement est conçu sous la forme d'un roulement à aiguilles (16).

5. Rétroviseur extérieur selon l'une des revendications précédentes, caractérisé en ce que le bras de rétroviseur (2) peut être immobilisé dans ses positions extrêmes par un assemblage encliqueté intégré dans le boîtier (5).

6. Rétroviseur extérieur selon l'une des revendications précédentes, caractérisé en ce que la pièce de l'accouplement à friction (6) reliée à l'arbre de sortie (11) du moto-réducteur de positionnement (12) est conçue sous la forme d'une douille (8) qui s'étend coaxialement à l'axe de pivotement et qui, dans sa zone opposée à l'arbre de sortie (11), comporte une collerette d'accouplement (7) s'étendant radialement vers l'intérieur, et en ce que le bras de rétroviseur (2) comporte une première collerette fixe axialement (14) et une seconde collerette (9) sous la forme d'un écrou vissable sur l'extrémité libre du bras de rétroviseur, lesdites collerettes (14, 9) entourant axialement la collerette d'accouplement (7) de la douille (8) avec leurs faces avant tournées l'une vers l'autre, et étant appliquées par friction contre ladite collerette d'accouplement (7) avec une force axiale définie.

7. Rétroviseur extérieur selon la revendication 6, caractérisé en ce qu'au moins la première collerette fixe axialement (14) du bras de rétroviseur (2) est de forme conique dans sa zone tournée vers la collerette d'accouplement (7) de la douille (8) et la douille (8) comporte un cône antagoniste correspondant dans la zone de contact avec la première collerette (14).

8. Rétroviseur extérieur selon l'une des revendications précédentes, caractérisé en ce que le bras de rétroviseur (2) est centré radialement sans jeu ou avec un faible jeu radial dans la collerette d'accouplement (7) de la douille (8), et en ce que le palier à roulement est disposé à la périphérie extérieure de la douille (8) et sensiblement à la même hauteur axiale que l'accouplement à friction (6).

9. Rétroviseur extérieur selon l'une des revendications précédentes, caractérisé en ce que les zones de contact entre les deux collerettes (14, 9) du bras de rétroviseur (2) sont munies, d'une part, de la collerette d'accouplement (7) de la douille (8) et, d'autre part, de garnitures de friction (10).

## Claims

1. A remote-controllably pivotable external mirror (1) for commercial vehicles, comprising a mirror arm (2) which can be at least indirectly mounted to the vehicle body (4) and which is force-lockingly connected by way of a slipping clutch (6) to an output shaft (11) of a drive adjusting motor (12) and can be pivoted thereby about a vertical axis between two limit positions — a folded-in position and a folded-out position — and further comprising two limit switches (21, 21') which switch off the drive adjusting motor (12) when the external mirror (1) occupies the limit positions, characterised by the combination of the following features:

a) the output shaft (11) of the drive adjusting motor (12) and a part of the slipping clutch (6) or a part which is connected to the slipping clutch at least partially coaxially overlap each other, wherein a rotationally rigid connection is made between the output shaft (11) and the slipping clutch (6) by a locking pin (13) which passes radially through said region of overlap and which is so dimensioned that it breaks when the maximum force occurring due to operation of the arrangement is exceeded;

b) the slipping clutch (6), the two limit switches (21, 21') and the drive adjusting motor (12) are arranged in a housing (5) which can be secured to the vehicle body (4); and

c) actuation of the limit switches (21, 21') is effected by the locking pin (13), wherein the locking pin for that purpose projects at least at one side beyond the outer peripheral surface of the region of overlap.

2. An external mirror according to claim 1 characterised in that a signal is given in the driving cab of the commercial vehicle in the folded-in position and when the external mirror (1) pivots in and out.

3. An external mirror according to claim 1 or claim 2 characterised in that the external mirror (1) is mounted in the housing (5) by way of at least one rolling bearing which is arranged in an annular gap between a vertically extending bore in the housing which accommodates the slipping clutch (6), and the part of the slipping clutch (6) which is connected to the output shaft (11) of the drive adjusting motor (12).

4. An external mirror according to claim 3 characterised in that the rolling bearing is in the form of a needle bearing (16).

5. An external mirror according to one of the preceding claims characterised in that the mirror arm (2) can be arrested in its limit positions by a locking means which is integrated in the housing (5).

6. An external mirror according to one of the preceding claims characterised in that the part of the slipping clutch (6) which is connected to the output shaft (11) of the drive adjusting motor (12) is in the form of a sleeve (8) which extends coaxially with respect to the pivot axis and which in its region remote from the output shaft (11) has a radially inwardly extending coupling collar (7) and that the mirror arm (2) has an axially fixed first collar (14) and a second collar (9) which in the form of a nut can be screwed on to the free end of the mirror arm, which collars (14, 9) axially enclose the coupling collar (7) of the sleeve (8) with their faces which face towards each other and bear against the coupling collar (7) in frictional engagement with a defined axial force.

7. An external mirror according to claim 6 characterised in that at least the axially fixed first collar (14) on the mirror arm (2) is of a conical configuration in its region towards the coupling collar (7) of the sleeve (8) and the sleeve (8) is of a corresponding co-operating conical configuration in its region of contact with the first collar (14).

8. An external mirror according to one of the preceding claims characterised in that the mirror arm (2) is centered radially in a playfree manner or with a slight amount of radial play in the coupling collar (7) of the sleeve (8) and that the rolling bearing is arranged at the external periphery of the sleeve (8) and at approximately the same axial level as the slipping clutch (6).

9. An external mirror according to one of the preceding claims characterised in that the contact regions between the two collars (14, 9) on the mirror arm (2) on the one hand and the coupling collar (7) on the sleeve (8) on the other hand are provided with friction linings (10).

*Fig.1*

*Fig. 2*